# DEMANDE DE BREVET EUROPEEN

(11) **EP 2 368 776 A1**
(43) Date de publication de la demande: **28.09.2011**
(21) Numéro de dépôt: 11155749.2
(22) Date de dépôt: 24.02.2011
(51) Int. Cl.: B60S 1/52, B60S 1/38

(54) **Connecteur hydraulique pour système d'essuie-glace**

(30) Priorité: 16.03.2010 FR 1001041
(71) Demandeur: Valeo Systèmes d'Essuyage, 78321 Le Mesnil Saint Denis (FR)
(72) Inventeur: Caillot, Gérald, 78720, Cernay la Ville (FR); Jarasson, Jean-Michel, 78321, Le Mesnil Saint Denis (FR); Izabel, Vincent, 91380, Chilly Mazarin (FR)
(74) Mandataire: Rosolen-Delarue, Katell

(57) **Abrégé**

L'invention concerne un connecteur hydraulique pour un système d'essuie-glace notamment pour véhicule automobile, ledit connecteur hydraulique étant apte à être connecté d'une part à un balai d'essuyage articulé sur un bras d'actionnement par l'intermédiaire d'un adaptateur (3), et d'autre part audit adaptateur (3), ledit connecteur hydraulique comprenant un raccord d'entrée (42) comportant au moins une entrée (420) destinée à être raccordée à une arrivée de fluide, et au moins deux raccords de sortie (44-46) destinés à alimenter en fluide au moins une rampe d'acheminement de fluide du balai d'essuyage (1). Selon l'invention, le connecteur hydraulique comporte au moins un dispositif anti-retour (43).

## Description

La présente invention est relative à un système d'essuie-glace, notamment pour un véhicule automobile.

Les systèmes d'essuie-glace, tels que ceux utilisés pour le nettoyage ou le dégivrage du pare-brise d'un véhicule automobile, comprennent généralement un bras d'actionnement relié à un réservoir de fluide ou liquide de nettoyage et/ou de dégivrage, et à un moteur, ainsi qu'un balai d'essuyage connecté au bras d'actionnement.

La connexion entre le bras et le balai doit autoriser la rotation de ce balai par rapport à ce bras lors du processus d'essuyage.

En outre, le balai doit pouvoir être facilement connecté ou déconnecté du bras pour permettre son remplacement ou entretien.

On prévoit donc généralement un adaptateur entre le bras et le balai pour assurer cette connexion amovible et permettre la rotation du balai par rapport au bras.

Dans le cas où la projection du fluide ou liquide de nettoyage s'effectue à partir de buses fixes, disposées par exemple sur le capot du véhicule ou à la base de la vitre à essuyer, la connexion entre le bras et le balai n'a pas d'autres fonctions que celles mentionnées ci-dessus.

Il est également connu de prévoir un dispositif de projection de liquide de lavage monté sur l'essuie-glace même, ce qui permet d'obtenir un arrosage plus uniforme de la vitre. Dans ce cas néanmoins, il est nécessaire d'amener le fluide ou liquide de nettoyage jusqu'au balai. Généralement, le balai comprend une ou deux rampes d'acheminement du fluide. On peut prévoir de connecter directement le ou les tuyaux d'arrivée en fluide sur ces rampes, mais la connexion hydraulique est alors peu fiable en raison du mouvement relatif entre le bras et le balai.

De plus, il est difficile dans ce cas de cacher et de protéger les tuyaux d'arrivée.

Pour résoudre ces problèmes, on utilise donc en général, en plus de l'adaptateur précité, un connecteur hydraulique sur l'entrée duquel vient se connecter l'arrivée en fluide, et dont la sortie est raccordée aux rampes d'acheminement du fluide dans le balai.

Pour des raisons évidentes de sécurité lors de la conduite, il est important que le temps de réaction pour l'aspersion du fluide suite à une commande d'activation soit réduit au minimum. Or, ce temps de réaction est d'autant plus grand pour les dispositifs d'aspersion intégrés au balai d'essuyage que le chemin à parcourir pour le fluide entre le réservoir de fluide et les rampes d'acheminement est beaucoup plus long que dans le cas des buses fixées sur le capot.

La présente invention a pour but d'optimiser ce temps de réaction.

Ce but est atteint selon l'invention qui a pour objet un connecteur hydraulique pour un système d'essuie-glace notamment pour véhicule automobile, ledit connecteur hydraulique étant apte à être connecté d'une part à un balai d'essuyage articulé sur un bras d'actionnement par l'intermédiaire d'un adaptateur, et d'autre part audit adaptateur, ledit connecteur hydraulique comprenant un raccord d'entrée comportant au moins une entrée destinée à être raccordée à une arrivée de fluide, et au moins deux raccords de sortie destinés à alimenter en fluide au moins une rampe d'acheminement de fluide du balai d'essuyage, **caractérisé en ce que** ledit connecteur hydraulique comporte au moins un dispositif anti-retour.

Le dispositif anti-retour empêche le liquide en aval de ce dispositif de remonter en amont. De plus, on évite que le liquide de nettoyage ne soit délivré aux rampes tant qu'une certaine pression de seuil n'est pas atteinte. En conséquence, le liquide n'est pas projeté par le balai même en présence de gouttelettes résiduelles, du fait de l'inertie quand le balai est en mouvement en dehors de l'activation de l'arrosage.

Dans un premier mode de réalisation, le connecteur hydraulique comporte une base principale portant les raccords de sortie et sur laquelle le raccord d'entrée est fixé, et le dispositif anti-retour est un clapet anti-retour à bille ou à membrane inséré entre la base principale et le raccord d'entrée.

Le raccord d'entrée est alors fixé à la base principale par soudure par ultrasons et/ou par collage, ou par tout procédé d'assemblage garantissant une étanchéité.

En variante, le raccord d'entrée du connecteur hydraulique comporte au moins une entrée venant s'enficher en force dans un orifice cylindrique de la base principale. Dans ce cas, le dispositif anti-retour est inséré dans ledit orifice cylindrique. L'entrée porte avantageusement un joint d'étanchéité annulaire. Ainsi, une parfaite étanchéité après assemblage est garantie.

L'invention ainsi que les avantages qu'elle procure seront mieux compris au vu de la description qui suit de deux exemples de réalisation non limitatifs de l'invention, faite en référence aux figures annexées, dans lesquelles :
- la figure 1 est une vue partielle en perspective éclatée d'un système d'essuie-glace comportant un connecteur hydraulique selon un premier mode de réalisation possible conforme à l'invention ;
- la figure 2 est un agrandissement de l'adaptateur et du connecteur hydraulique de la figure 1 ;
- les figures 3a et 3b illustrent schématiquement, en coupe, les éléments constitutifs du connecteur des figures 1 et 2, respectivement avant et après assemblage;
- la figure 4 représente un adaptateur et un connecteur hydraulique selon un second mode de réalisation possible conforme à l'invention ;
- la figure 5 est une vue partielle en perspective éclatée d'un système d'essuie-glace comportant le connecteur hydraulique de la figure 4 ;
- la figure 6 est une vue partielle en coupe longitudinale du système de la figure 5, en position assemblée ;
- la figure 7 est une vue partielle en perspective éclatée d'un autre système d'essuie-glace avec une autre structure de balai, comportant le connecteur hydraulique de la figure 4.

Dans la suite de la description, on décrira deux exemples de connecteurs hydrauliques pour l'alimentation en fluide d'un balai d'essuie-glace comportant deux rampes d'acheminement de fluide. Bien entendu, le connecteur décrit peut être aisément adapté au cas où il est prévu d'utiliser une seule rampe d'acheminement de fluide sur le balai.

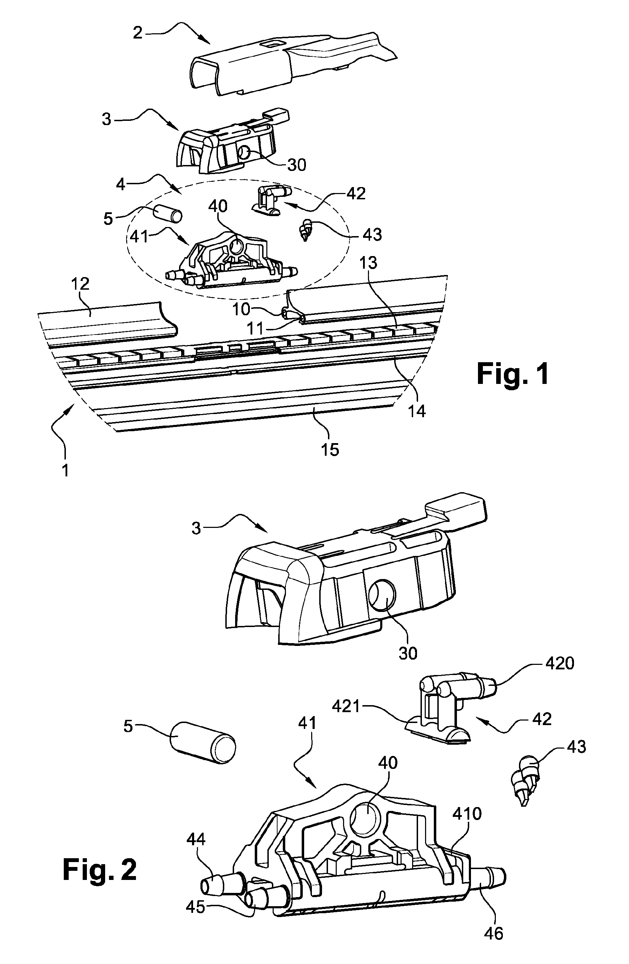

Tel que représenté sur les figures 1 et 2, un système d'essuie-glace conforme à l'invention comprend un balai d'essuyage 1 destiné à être relié à un bras 2 d'actionnement par l'intermédiaire d'un adaptateur 3.

L'adaptateur 3 est relié en rotation à un connecteur hydraulique 4 par un axe d'articulation 5 et des orifices d'assemblage 30 et 40 respectivement dans l'adaptateur 3 et le connecteur hydraulique 4.

Le connecteur hydraulique 4 comporte trois ensembles 41, 42, 43 qui seront détaillés par la suite.

Le balai d'essuyage est, dans cet exemple non limitatif, du type comportant deux rampes d'acheminement de fluide 10, 11 formées par exemple dans une partie supérieure du balai jouant le rôle de déflecteur 12.

Plus précisément, le déflecteur 12 est formé de deux parties identiques portant chacune une partie des deux rampes d'acheminement de fluide 10, 11, chacune des deux parties du déflecteur étant apte à être connectée de chaque côté du connecteur hydraulique 4.

Le connecteur hydraulique 4 comporte quant à lui une base principale 41, un raccord d'entrée 42 à doubles entrées 420 destinées à être connectées à deux arrivées en fluide (non représentées), et quatre raccords de sortie, dont trois seulement, référencés 44, 45 et 46 sont visibles sur les figures 1 et 2, destinés à être raccordés deux à deux aux rampes d'acheminement 10 et 11. Plus précisément, les raccords de sortie 44 et 45 situés d'un même côté du connecteur sont destinés à être connectés respectivement aux rampes 10 et 11 situées sur une même partie du déflecteur 12 (partie gauche sur la figure 1), alors que le raccord de sortie 46 et le quatrième raccord non visible sont destinés à être connectés respectivement aux rampes 10 et 11 situés sur l'autre partie du déflecteur 12 (partie droite sur la figure 1). Les rampes d'acheminement 10 et 11 sont percées, au moins sur une partie de leur longueur, d'orifices (non représentés) permettant de projeter le fluide sur la vitre.

Comme on peut le voir plus précisément sur la figure 1, le déflecteur 12 d'une part, et la base principale 41 du connecteur d'autre part, présentent un profil formant logement permettant de recevoir un support plastique 13 qui reçoit à son tour une lame métallique 14, et, en partie inférieure, une lame 15 d'essuyage en caoutchouc ou similaire.

Dans l'exemple de réalisation présenté sur les figures 1 et 2, le raccord d'entrée 42 est une pièce distincte de la base principale 41, de préférence, en matière plastique, tout comme la base principale, et que l'on vient assembler sur la base principale par soudure ultrasons et/ou collage, ou tout autre moyen d'assemblage approprié permettant de garantir une parfaite étanchéité. Les raccords de sorties sont de préférence venus de moulage avec la base principale 41.

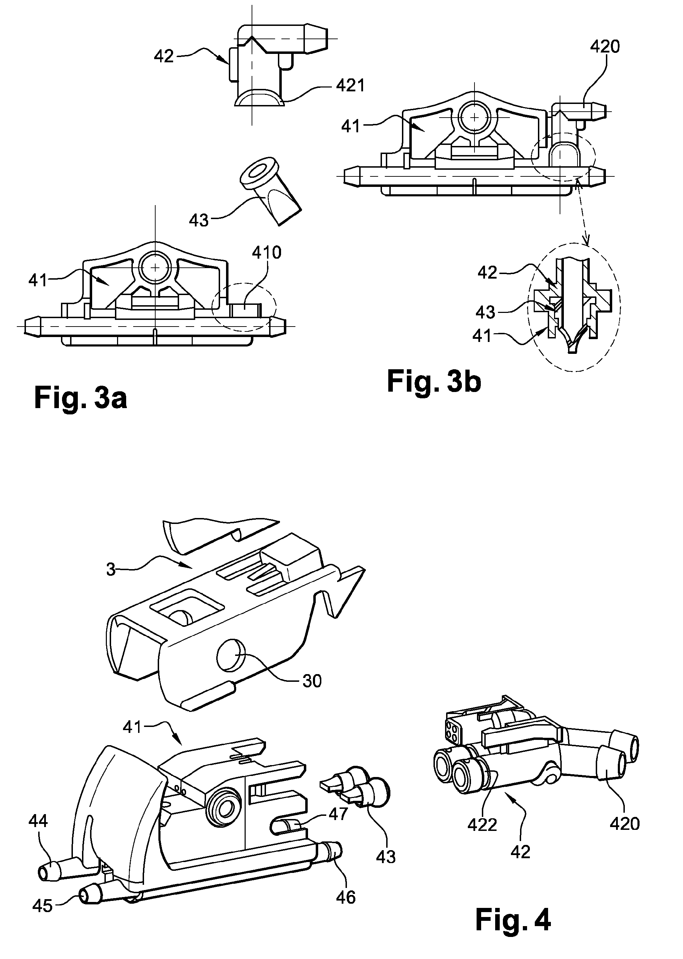

Conformément à l'invention, le connecteur hydraulique 4 comporte également un dispositif anti-retour 43, de préférence sous forme d'un clapet anti-retour à bille ou à membrane (connu sous la terminologie anglo-saxonne « duck-bill »), disposé de façon à empêcher le fluide de ressortir en amont du connecteur, vers le réservoir de liquide. Avantageusement, le dispositif anti-retour 43 est placé au niveau de chaque entrée du connecteur. Dans l'exemple représenté où le raccord d'entrée 42 comporte deux entrées 420 sous forme de canules, deux dispositifs anti-retour sont intégrés dans le connecteur, au niveau de la zone d'assemblage du raccord et de la base principale. Plus précisément, comme plus particulièrement visible sur les figures 3a et 3b montrant les éléments constitutifs du connecteur respectivement avant et après assemblage, le raccord comporte une base 421 portant les extrémités des canules coudées en forme de L, la base venant se fixer sur une forme 410 correspondante de la base principale 41 de sorte que les extrémités libres des canules, destinées à recevoir les arrivées en fluide, s'étendent sensiblement parallèlement aux raccords de sortie 44 à 46. Avant assemblage de la base principale 41 et du raccord d'entrée 42, un clapet anti-retour 43 est inséré dans la base 421 ou dans la forme 410 de manière à se retrouver dans une position sensiblement orthogonale aux raccords de sortie. Le clapet 43 se retrouve donc inséré dans le connecteur, entre la base principale 41 et chaque canule du raccord d'entrée 42, et le raccord d'entrée peut alors être assemblé comme indiqué précédemment, par soudure par ultrasons et/ou par collage, ou autres moyens d'assemblage appropriés permettant de garantir une parfaite étanchéité.

L'exemple précédent est aisément généralisable au cas où le raccord d'entrée ne comporterait qu'une seule canule d'entrée.

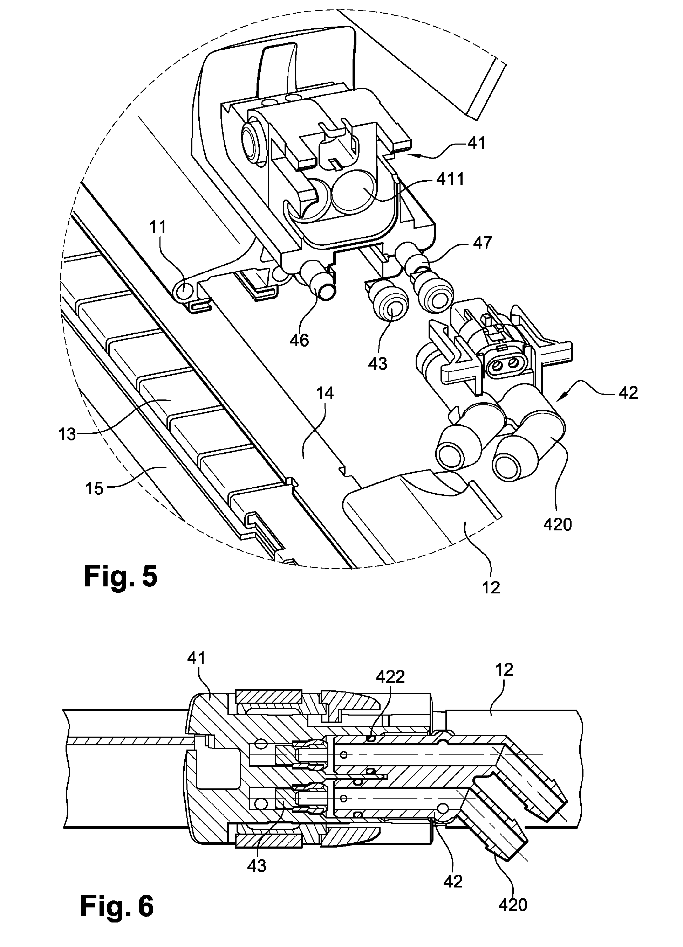

Un autre exemple de réalisation d'un connecteur hydraulique conforme à l'invention est illustré sur les figures 4 à 6. Sur ces figures, les éléments déjà décrits précédemment portent les mêmes références. On retrouve ainsi le connecteur hydraulique 41 destiné à être connecté à un adaptateur 3 (figure 4), et à un balai dit « flat-blade » en terminologie anglo-saxonne, comportant par exemple les différents éléments 12-15 (voir figure 5) qui ont été décrits précédemment en référence à la figure 1. Le connecteur hydraulique comporte toujours une base principale 41 portant les raccords de sortie 44 à 47, avantageusement venus de moulage. Le raccord d'entrée 42 est ici un peu plus élaboré que le raccord d'entrée décrit pour l'exemple précédent, car il est susceptible de servir également de connecteur électrique en vue du chauffage du fluide de nettoyage et du balai. Néanmoins, pour sa fonction purement hydraulique, ce raccord d'entrée est similaire au précédent du fait qu'il comporte également deux entrées 420 destinées à être raccordées d'une part à des arrivées de fluide, et d'autre part à la base principale 41. A cet effet, la base principale 41 comporte deux orifices cylindriques 411 (figure 5) dans lesquels viennent s'enficher « en force » les extrémités correspondantes des entrées 420. Avant d'assembler le raccord d'entrée 42 sur la base principale 41, un dispositif anti-retour 43, de préférence un clapet anti-retour à bille ou à membrane, est inséré dans chacun des orifices cylindriques 411.

Pour garantir une parfaite étanchéité, chaque entrée 420 porte une gorge périphérique recevant un joint annulaire 422.

Une fois l'assemblage terminé, et comme visible sur la figure 6, le clapet anti-retour 43 se retrouve donc inséré dans le connecteur, entre la base principale 41 et chaque entrée du raccord d'entrée 42, de sorte que le fluide est interdit de retourner en amont du connecteur hydraulique. L'étanchéité est garantie par la présence des joints annulaires 422. Ici encore, l'invention est aisément généralisable au cas où le raccord d'entrée ne comporterait qu'une seule entrée enfichée dans un unique orifice cylindrique correspondant de la base principale 41 du connecteur hydraulique.

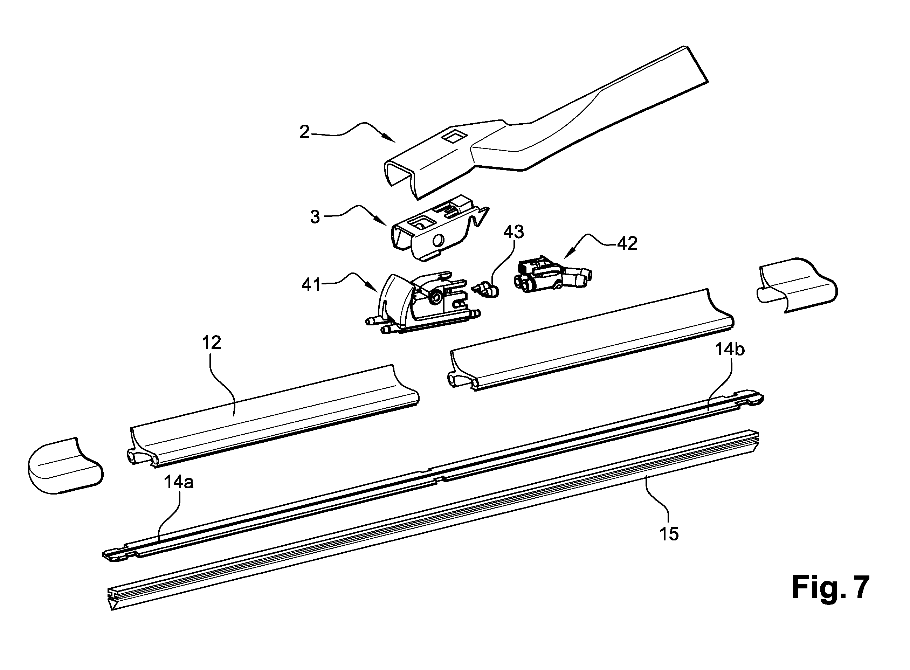

Il convient de noter que la structure du balai de type « flat-blade » est indépendante ici du connecteur hydraulique conforme à l'invention. En d'autres termes, le connecteur hydraulique peut être connecté à n'importe quelle structure de balai de type « flat-blade ». La figure 7 illustre notamment, à titre d'exemple non limitatif, le connecteur hydraulique de la figure 4 pour une autre structure de balai. On retrouve donc le bras 2 d'actionnement, l'adaptateur 3, et le connecteur hydraulique déjà décrit précédemment comportant la base principale 41, le raccord d'entrée 42 et les dispositifs anti-retour 43. Le balai d'essuyage comporte toujours un déflecteur 12 formé de deux partie identiques aptes à être placées de part et d'autre de la base principale 41 du connecteur hydraulique, et une lame 15 d'essuyage en caoutchouc ou similaire. La lame 15 porte deux rainures longitudinales aptes à recevoir deux lames ou vertèbres métalliques 12a, 12b. En position assemblée, le déflecteur est monté sur l'ensemble constitué de la lame 15 et des deux vertèbres 14a, 14b. Il convient de noter que le déflecteur pourrait également être venu de moulage avec la lame 15 d'essuyage.

Grâce à l'invention, on réduit le temps de réaction de la projection du liquide lors de l'activation du nettoyage de la vitre. Le dispositif anti-retour empêche le liquide en aval de ce dispositif de remonter en amont. De plus, on évite que le liquide de nettoyage ne soit délivré aux rampes tant qu'une certaine pression de seuil n'est pas atteinte. En conséquence, le liquide n'est pas projeté par le balai même en présence de gouttelettes résiduelles, du fait de l'inertie quand le balai est en mouvement en dehors de l'activation de l'arrosage.

En outre, la durée de vie imposée au dispositif anti-retour correspond à celle demandée au balai et non plus à celle du véhicule. En effet, le dispositif anti-retour sera changé à chaque changement de balai puisqu'il est à présent intégré dans un connecteur du balai.

## Revendications

1. Connecteur hydraulique (4) pour un système d'essuie-glace notamment pour véhicule automobile, ledit connecteur hydraulique étant apte à être connecté d'une part à un balai d'essuyage (1) articulé sur un bras (2) d'actionnement par l'intermédiaire d'un adaptateur (3), et d'autre part audit adaptateur (3), ledit connecteur hydraulique comprenant un raccord d'entrée (42) comportant au moins une entrée (420) destinée à être raccordée à une arrivée de fluide, et au moins deux raccords de sortie (44-47) destinés à alimenter en fluide au moins une rampe (10, 11) d'acheminement de fluide du balai d'essuyage (1), **caractérisé en ce que** ledit connecteur hydraulique (4) comporte au moins un dispositif anti-retour (43).

2. Connecteur hydraulique (4) selon la revendication 1 , **caractérisé en ce qu'il** comporte une base principale (41) portant les raccords de sortie (44-47) et sur laquelle le raccord d'entrée (42) est fixé, **et en ce que** le dispositif anti-retour est un clapet anti-retour à bille ou à membrane inséré entre la base principale (41) et le raccord d'entrée (42).

3. Connecteur hydraulique (4) selon la revendication 2, **caractérisé en ce que** le raccord d'entrée (42) est fixé à la base principale (41) par soudure par ultrasons et/ou par collage ou par tout procédé d'assemblage garantissant une étanchéité.

4. Connecteur hydraulique (4) selon la revendication 3, **caractérisé en ce que** le raccord d'entrée (42) comporte une base (421) portant l'extrémité d'au moins une canule formant une entrée (420) dudit raccord d'entrée (42), ladite base (421) étant fixée sur une forme correspondante (410) de la base principale (41 ).

5. Connecteur hydraulique (4) selon la revendication 4, **caractérisé en ce que** ladite canule formant une entrée (420) est coudée en forme de L, une extrémité de la canule destinée à recevoir ladite arrivée de fluide s'étendant sensiblement parallèlement aux raccords de sortie (44-47), **et en ce que** le dispositif anti-retour (43) est inséré dans ladite base (421) ou dans ladite forme correspondante (410) de manière à s'étendre sensiblement orthogonalement aux raccords de sortie (44-47).

6. Connecteur hydraulique (4) selon la revendication 2, **caractérisé en ce que** le raccord d'entrée (42) comporte au moins une entrée (420) venant s'enficher en force dans un orifice cylindrique (411) de la base principale (41), **et en ce que** le dispositif anti-retour (43) est inséré dans ledit orifice cylindrique (411).

7. Connecteur hydraulique (4) selon la revendication 6, **caractérisé en ce que** ladite entrée (420) porte une gorge périphérique recevant un joint d'étanchéité annulaire (422).

8. Connecteur hydraulique (4) selon l'une quelconque des revendications 6 ou 7, **caractérisé en ce qu**'il sert également de connecteur électrique en vue du chauffage du fluide et du balai d'essuyage (1).

9. Connecteur hydraulique selon l'une quelconque des revendications 2 à 8, **caractérisé en ce que** les raccords de sortie (44-47) sont venus de moulage avec la base principale (41).

10. système d'essuie-glace notamment pour véhicule automobile, comportant un balai d'essuyage (1) articulé sur un bras (2) d'actionnement par l'intermédiaire d'un adaptateur (3), **caractérisé en ce que** le balai d'essuyage (1) est connecté à l'adaptateur (3) par l'intermédiaire d'un connecteur hydraulique (4) selon l'une quelconque des revendications précédentes.
